# FASCICULE DE BREVET EUROPEEN

(11) **EP 3 273 905 B1**
(45) Date de publication et mention de la délivrance du brevet: **08.12.2021**
(21) Numéro de dépôt: 16718416.7
(22) Date de dépôt: 25.03.2016
(51) Int. Cl.: A61C 19/05, G06T 7/00, G06T 11/00, G06T 17/20

(54) **PROCEDE DE DETERMINATION D'UNE CARTOGRAPHIE DES CONTACTS ET/OU DES DISTANCES ENTRE LES ARCADES MAXILLAIRE ET MANDIBULAIRE D'UN INDIVIDU**
VERFAHREN ZUR BESTIMMUNG EINER KARTE DER KONTAKTE UND/ODER ABSTÄNDE ZWISCHEN DEN MAXILLAR- UND MANDIBULARBÖGEN EINES PATIENTEN
METHOD FOR DETERMINING A MAP OF THE CONTACTS AND/OR DISTANCES BETWEEN THE MAXILLARY AND MANDIBULAR ARCHES OF A PATIENT

(30) Priorité: 25.03.2015 FR 1552508
(43) Date de publication de la demande: 31.01.2018
(73) Titulaire: Modjaw, 69100 Villeurbanne (FR)
(72) Inventeur: JAISSON, Maxime, 73800 Les Marches (FR)
(74) Mandataire: Regimbeau
(86) Numéro de dépôt international: PCT/FR2016/050676
(87) Numéro de publication internationale: WO 2016/151263

(56) Documents cités:
- JP-A- 2010 017 467
- JP-A- 2013 240 534
- US-A- 5 873 721
- US-A1- 2003 214 501
- US-A1- 2004 220 691
- US-A1- 2005 089 213
- US-A1- 2011 254 839
- US-A1- 2012 072 177
- US-A1- 2014 294 273
- US-B1- 6 334 853
- US-B1- 8 013 853

## Description

### DOMAINE DE L'INVENTION

La présente invention concerne un procédé de détermination d'une cartographie des contacts et/ou des distances entre les dents de l'arcade maxillaire et de l'arcade mandibulaire d'un individu.

### ARRIERE PLAN DE L'INVENTION

L'enregistrement de la cinématique mandibulaire d'un individu a permis des progrès importants dans la conception d'appareils dentaires. En effet, cet enregistrement permet d'animer des modèles tridimensionnels des arcades dentaires et de visualiser en particulier l'engrènement des dents. Cette simulation numérique permet de s'affranchir des articulateurs mécaniques utilisés traditionnellement.

Le document US 2003/0214501 décrit un procédé de détermination d'une cartographie des distances entre les dents de l'arcade maxillaire et de l'arcade mandibulaire d'un individu.

Le document WO 2013/030511 décrit un procédé de conception d'un appareil dentaire qui met en oeuvre un enregistrement de la cinématique mandibulaire du patient.

Ce procédé comprend tout d'abord soit l'obtention d'une image volumique du massif facial par une technique de tomodensitométrie, soit la détermination des plans de référence du massif facial par repérage de points d'intérêt sur le visage du patient.

Par ailleurs, des modèles tridimensionnels des arcades dentaires du patient sont obtenus. Lesdits modèles, positionnés l'un par rapport à l'autre lors de leur création, sont recalés avec l'image volumique du massif facial ou les plans de référence déterminés au préalable.

L'enregistrement de la cinématique mandibulaire est mis en oeuvre en équipant le patient d'un marqueur fixé sur le front du patient et de marqueurs fixés directement sur les dents de l'arcade mandibulaire ou sur la mandibule par l'intermédiaire d'un support, et en repérant et enregistrant les déplacements desdits marqueurs au moyen d'une caméra lors de mouvements mandibulaires du patient.

La cinématique mandibulaire ainsi enregistrée peut être appliquée aux modèles tridimensionnels des arcades pour obtenir une simulation numérique du déplacement relatif des deux arcades.

Un critère d'intérêt pour le praticien chargé de concevoir un appareil dentaire est la configuration des contacts interdentaires.

Il serait donc souhaitable de pouvoir exploiter la cinématique mandibulaire enregistrée pour obtenir une cartographie des contacts interdentaires ou des distances entre les dents des deux arcades.

Cependant, la détermination de ces cartographies nécessite un temps de calcul important en raison de la taille des modèles numériques à manipuler.

### BREVE DESCRIPTION DE L'INVENTION

Un but de la présente invention est d'établir une cartographie des contacts et/ou des distances entre les dents des deux arcades dans un temps de calcul limité.

Conformément à l'invention, il est proposé un procédé de détermination d'une cartographie des contacts et/ou des distances entre les dents de l'arcade maxillaire et de l'arcade mandibulaire d'un individu, caractérisé en ce qu'il comprend les étapes suivantes :
- l'obtention de la cinématique mandibulaire enregistrée sur l'individu, ladite cinématique mandibulaire étant enregistrée en repérant et en enregistrant, au moyen d'une caméra, les déplacements de marqueurs fixés d'une part sur le front du patient et d'autre part sur l'arcade mandibulaire, lors de mouvements mandibulaires du patient,
- l'obtention de maillages surfaciques de l'arcade maxillaire et de l'arcade mandibulaire et le recalage desdits maillages l'un par rapport à l'autre,
- la création d'un maillage réduit d'au moins une desdites arcades, comprenant la sélection, dans le maillage de ladite arcade, des mailles dont les nœuds sont situés à une distance inférieure à 1 cm du maillage de l'arcade antagoniste,
- la création, pour chaque maille dudit maillage réduit, d'une boîte englobante comprenant une pluralité de voxels entourant ladite maille,
- à partir de la cinématique mandibulaire, le calcul d'un réseau des contacts comprenant, pour chaque voxel de la boîte englobante, une information sur l'existence d'un contact entre ledit voxel et un nœud du maillage de l'arcade antagoniste au cours d'un mouvement relatif de l'arcade mandibulaire vis-à-vis de l'arcade maxillaire.

Selon l'invention, le procédé comprend en outre :
- pour chaque nœud dudit maillage réduit, la détermination, à partir du réseau des contacts, de l'existence ou non d'un contact entre ledit nœud et un nœud du maillage de l'arcade antagoniste,
- l'application d'une couleur représentative de l'existence d'un contact à chaque maille comprenant un nœud pour lequel un contact a été détecté, et
- l'affichage de ladite couleur sur chaque maille respective du maillage de l'arcade, de sorte à former une carte des contacts entre les dents des deux arcades.

Selon l'invention, on applique la cinématique mandibulaire pour animer les maillages des arcades et en ce que l'on réactualise l'affichage de la couleur au cours de cette animation.

Selon un mode de réalisation, lors de la réactualisation de l'affichage, on conserve temporairement l'affichage antérieur et on l'atténue progressivement.

Selon une forme d'exécution de l'invention, le procédé comprend en outre :
- pour chaque nœud dudit maillage réduit, la détermination, à partir du réseau des contacts, de la distance entre ledit nœud et un nœud du maillage de l'arcade antagoniste,
- l'application d'une couleur représentative de ladite distance à chaque maille comprenant ledit nœud, et
- l'affichage de ladite couleur sur chaque maille respective du maillage de l'arcade, de sorte à former une carte des distances entre les dents des deux arcades.

Selon un mode de réalisation, on applique la cinématique mandibulaire pour animer les maillages des arcades et en ce que l'on réactualise l'affichage de la couleur au cours de cette animation.

De manière particulièrement avantageuse, le maillage réduit est partitionné sous la forme d'un arbre k-d.

Selon un mode de réalisation, on crée un maillage réduit pour chacune des deux arcades.

Selon une forme d'exécution de l'invention, on détermine l'enveloppe limite des déplacements d'une arcade par rapport à l'arcade antagoniste en mettant en œuvre les étapes suivantes :
- à partir du maillage de l'une desdites arcades, on crée une structure volumique adaptée pour englober l'ensemble des positions de ladite arcade par rapport à l'arcade antagoniste au cours de la cinématique mandibulaire,
- on détermine, pour chaque position de l'arcade et pour chaque voxel de ladite structure, la distance entre le centre dudit voxel et chaque nœud du maillage de l'arcade antagoniste,
- on détermine si chaque voxel se situe à l'intérieur ou à l'extérieur du maillage de l'arcade antagoniste et on mémorise les voxels qui se situent à l'intérieur dudit maillage, lesdits voxels traduisant un contact entre les arcades,
- on cumule lesdits contacts pour l'ensemble des positions,
- on construit, à partir desdits voxels mémorisés, une surface représentant l'enveloppe limite des déplacements des dents,
- on affiche, sur ladite surface, une carte des contacts et/ou une carte des distances entre les dents des deux arcades.

De manière particulièrement avantageuse, pour enregistrer la cinématique mandibulaire, on équipe le patient de marqueurs fixés directement sur les dents de l'arcade mandibulaire ou sur la mandibule par l'intermédiaire d'un support.

L'invention concerne également l'utilisation du procédé décrit ci-dessus pour concevoir une prothèse dentaire à implanter sur une arcade de l'individu, comprenant :
- l'obtention d'un premier maillage de ladite arcade,
- à partir dudit premier maillage la mise en œuvre du procédé pour générer une cartographie des contacts et/ou des distances entre les dents des arcades mandibulaire et maxillaire,
- l'ajustement d'un modèle de la prothèse de sorte à optimiser les contacts et/ou distances obtenus lorsque le modèle de la prothèse est intégré audit premier maillage.

Ensuite, la conception de la prothèse peut comprendre :
- l'obtention d'un second maillage de l'arcade présentant des dents préparées pour recevoir ladite prothèse,
- l'application de la cinématique mandibulaire au second maillage,
- la conception de la prothèse définitive de sorte à respecter les contacts et/ou distances obtenus avec l'ajustement réalisé sur le premier maillage.

L'invention concerne également un produit programme d'ordinateur comportant un ensemble d'instructions qui, une fois chargées sur un ordinateur, permettent la mise en oeuvre du procédé tel que décrit précédemment.

Ledit produit peut être sur tout support informatique, comme par exemple une mémoire ou un CD-ROM.

### BREVE DESCRIPTION DES DESSINS

D'autres caractéristiques et avantages de l'invention ressortiront de la description détaillée qui va suivre, en référence aux dessins annexés sur lesquels :
- la figure 1 est un schéma de principe illustrant l'enregistrement de la cinématique mandibulaire,
- la figure 2 illustre un écran d'affichage d'une carte des contacts,
- la figure 3 illustre un écran d'affichage d'une carte des distances,
- la figure 4 illustre un FGP et le modèle de l'arcade correspondante,
- la figure 5 illustre un écran d'affichage d'une carte des distances sur un FGP.

### DESCRIPTION DETAILLEE DE L'INVENTION

### Obtention de maillages de l'arcade maxillaire et de l'arcade mandibulaire

Préalablement à la mise en oeuvre du procédé, les arcades dentaires ont été scannées dans une relation d'occlusion d'engrènement connu et reproductible. Un outil utilisable à cet effet est une caméra d'empreinte optique intrabuccale. On scanne une arcade puis l'autre, ainsi qu'une empreinte vestibulaire (sur le côté) des dents en engrènement pour connaître la position d'une arcade par rapport à l'autre. Cette opération est connue en elle-même et ne fait pas en tant que telle partie de l'invention. Une autre méthode peut consister à utiliser un scanner de table. Celui-ci scanne les modèles en plâtre issus d'empreintes physicochimiques l'un après l'autre puis en position d'engrènement. L'invention peut en effet être mise en œuvre avec tout modèle 3D des arcades dentaires généré par les techniques disponibles sur le marché.

Le résultat de ces scannages est un maillage surfacique de l'arcade maxillaire et de l'arcade mandibulaire. Chaque maillage est défini dans un repère orthonormé du scanner.

### Enregistrement de la cinématique mandibulaire

L'enregistrement de la cinématique mandibulaire a pour but de permettre de connaître la façon dont se déplace la mandibule dans l'espace, et d'utiliser cette cinématique pour animer des modèles tridimensionnels des arcades dentaires en vue de guider la conception d'une prothèse dentaire ou d'un autre dispositif de correction (appareil d'orthodontie, gouttière, ...).

Un mode de réalisation de cet enregistrement, ainsi que du recalage des arcades dentaires par rapport à des plans ou axes de référence du patient a déjà été décrit dans le document WO 2013/030511 et peut être mis en oeuvre dans la présente invention, l'invention n'étant toutefois pas limitée aux techniques décrites dans ce document.

D'une manière générale, l'enregistrement de la cinématique mandibulaire est mis en oeuvre en équipant le patient d'un marqueur fixé sur le front du patient et de marqueurs fixés directement sur les dents de l'arcade mandibulaire ou sur la mandibule par l'intermédiaire d'un support, et en repérant et enregistrant les déplacements desdits marqueurs au moyen d'une caméra lors de mouvements mandibulaires du patient.

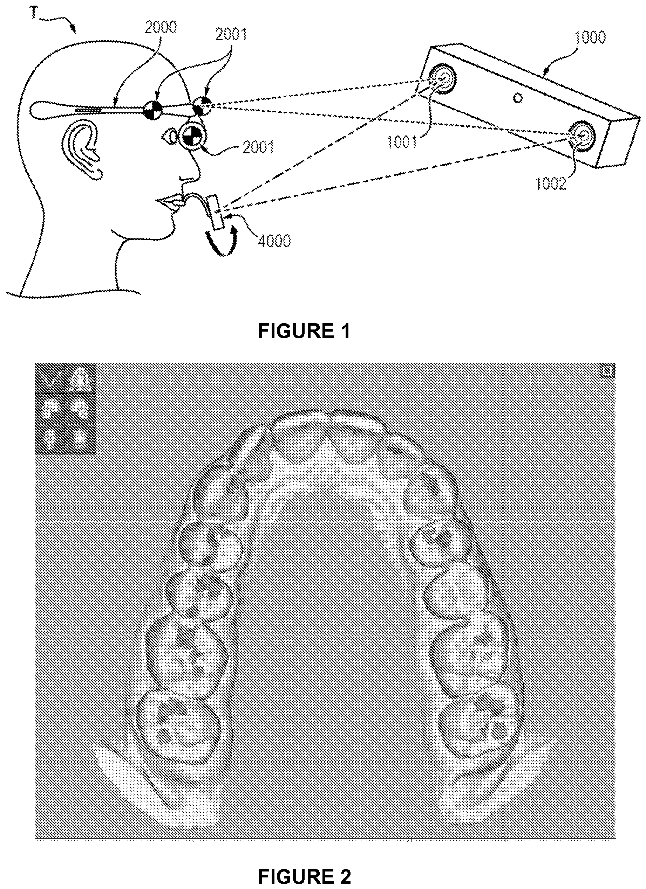

La figure 1 est un schéma de principe illustrant l'enregistrement de la cinématique mandibulaire.

On met en place sur la mandibule du patient une arche 4000 fixée aux dents portant des marqueurs détectables par une caméra 1000. De manière alternative, on peut utiliser une gouttière (non illustrée).

Le patient est par ailleurs également équipé d'un casque frontal 2000 portant des marqueurs 2001 détectables par ladite caméra 1000.

Dans l'exemple illustré, la caméra 1000 est une caméra stéréoscopique comprenant deux objectifs 1001, 1002.

Il est cependant possible d'utiliser tout autre type de caméra du marché, sous réserve d'équiper le casque frontal et l'arche fixée sur la mandibule des marqueurs détectables par ladite caméra.

Ces marqueurs peuvent être des diodes suivies par la caméra. Mais cela peut être des mires noires et blanches ou couleurs ou des sphères, des pastilles ou d'autres objets réfléchissants. Le déplacement des marqueurs de la mandibule est suivi par la caméra 1000 et cela par rapport aux marqueurs 2001 du front. Une transformation rigide permet de déduire le mouvement du modèle de l'arcade mandibulaire 3D par rapport au modèle 3D maxillaire.

Le modèle de l'arcade maxillaire et les plans de référence sont associés à l'animation de la mandibule en mouvement. Dans le logiciel il est possible d'afficher ou de cacher chacun de ces éléments.

### Création d'un maillage simplifié d'une arcade

Les calculs nécessitant une importante ressource graphique, les modèles tridimensionnels des arcades sont redimensionnés afin de permettre la mise en oeuvre du procédé sur la plupart des ordinateurs.

A cet effet, dans le modèle tridimensionnel d'une arcade, qui est constitué d'un maillage surfacique, on conserve uniquement les mailles dont les noeuds (sommets) sont situés à une distance inférieure à 1 cm de l'arcade antagoniste. Les autres mailles ne seront pas prises en compte dans le calcul.

Ce maillage réduit est obtenu au moins pour l'arcade sur laquelle on souhaite afficher la carte des contacts et/ou la carte des distances. Cependant, il est également possible de créer ce maillage réduit pour l'arcade antagoniste, notamment si l'on souhaite afficher les cartes de contacts et/ou de distances sur les modèles des deux arcades.

Ensuite, une étape de pré-calcul est mise en oeuvre en arrière-plan à partir du maillage réduit (ou simplifié) susmentionné. Certaines valeurs sont invariantes, telles que la distance entre les maillages des deux arcades. Un algorithme de calcul de distance entre un point et une maille tridimensionnelle (par exemple un triangle, bien que la forme des mailles puisse être différente) est appliqué et conservé en mémoire afin de matérialiser ultérieurement virtuellement les zones de contact. Ensuite, une boîte englobante (« bounding box » selon la terminologie anglo-saxonne) est associée à chaque maille du maillage simplifié. Ladite boîte est composée de plusieurs éléments volumiques, également appelés « voxels ». Pour chaque voxel de la boîte englobante, le logiciel détecte s'il y a contact ou non, c'est-à-dire si les noeuds du maillage de l'arcade antagoniste sont susceptibles de rentrer en confrontation avec ces voxels. Cet agencement ou réseau des contacts est désigné par le terme anglo-saxon « contact grid ».

### Arbre k-d

Selon un mode de réalisation avantageux, le réseau des contacts est partitionné spatialement sous la forme d'un arbre k-d (ou « k-d tree » selon la terminologie anglo-saxonne). Cet agencement permet une subdivision spatiale optimisée de l'espace, ce qui permet d'accélérer le traitement des données.

### Cartographie des contacts

La carte des contacts est destinée à informer le praticien sur l'existence ou non d'un contact entre les deux arcades, sans information de distance.

La sensibilité peut être ajustée à volonté. Typiquement, une sensibilité de contact entre -200 µm et +200 µm peut être retenue.

Selon un mode de réalisation, la carte des contacts peut être affichée de manière statique sur le maillage de l'une des arcades. A cet effet, on applique une couleur représentative de l'existence d'un contact à chaque maille contenant un nœud pour lequel un contact a été détecté, et l'on affiche ladite couleur sur chaque maille respective du maillage de l'arcade.

Selon un autre mode de réalisation, la carte des contacts peut être affichée de manière dynamique, c'est-à-dire que l'on applique la cinématique mandibulaire pour animer les maillages des arcades et l'on réactualise l'affichage de la couleur au cours de cette animation.

De manière avantageuse, cet affichage peut être associé à un effet de type « étoile filante » en permettant un suivi de la trace du contact sur l'arcade concernée. A cet effet, on conserve temporairement l'affichage des zones de contact pour la position précédente. Cet effet est obtenu en calculant la zone de couleur à afficher en fonction de l'âge du dernier contact. Eventuellement, on atténue progressivement la trace du contact.

La figure 2 illustre un exemple d'une telle carte des contacts affichée sur le maillage d'une arcade.

### Cartographie des distances

La carte des distances est destinée à fournir au praticien une information sur la distance entre les deux arcades au moyen d'un code couleur.

Ce code couleur permet également de signaler la proximité d'un contact. A cet effet, à l'approche d'un contact entre les deux maillages, la couleur des mailles du maillage concerné est différente de la couleur appliquée lorsque les deux maillages se touchent.

Pour construire la carte des distances, le logiciel traite tous les noeuds de l'arcade concernée de manière à déterminer, pour chacun desdits noeuds, les noeuds de l'arcade antagoniste les plus proches. De manière avantageuse, on utilise à cet effet l'arbre k-d mentionné plus haut. A partir des noeuds ainsi déterminé, on peut déterminer quelles mailles touchent le maillage de l'arcade antagoniste.

Le code couleur est ensuite déduit pour chaque nœud du maillage, en fonction de la distance calculée par l'algorithme.

Comme pour la carte des contacts susmentionnée, la carte des distances peut être affichée de manière dynamique, c'est-à-dire que l'on applique la cinématique mandibulaire pour animer les maillages des arcades et l'on réactualise l'affichage de la couleur au cours de cette animation.

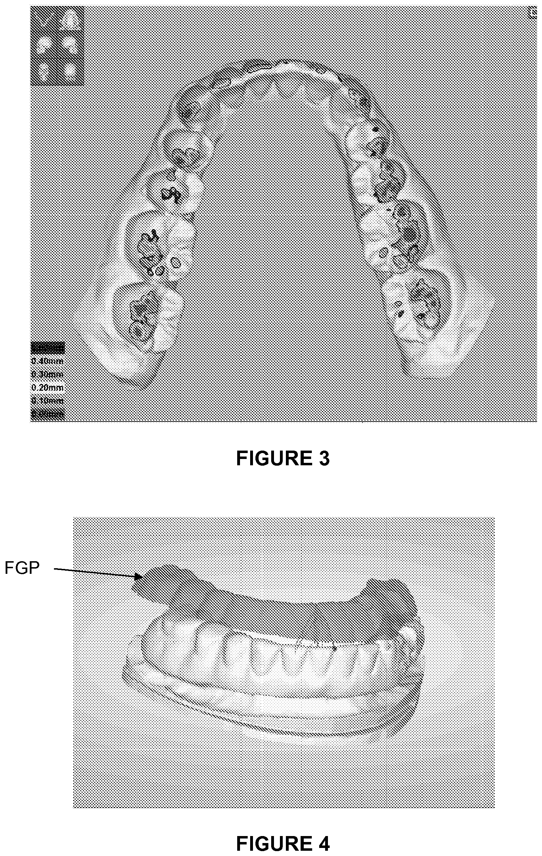

La figure 3 illustre une carte des distances polychrome indiquant la proximité des contacts dentaires.

### Détermination de l'enveloppe limite des déplacements d'une arcade par rapport à l'arcade antagoniste

Cette enveloppe est également désignée par l'acronyme FGP, du terme anglo-saxon « Functionally Generated Path ».

Cette surface matérialise l'enveloppe limite des déplacements dentaires dans l'espace. Cette surface est notamment utilisée lors de la conception assistée par ordinateur des prothèses dentaires, afin de s'assurer que leur forme s'intègre dans le mouvement des dents antagonistes sans heurt ni inconfort.

Cette enveloppe peut être calculée soit pour l'arcade mandibulaire, soit pour l'arcade maxillaire, étant entendu que seule l'arcade mandibulaire est mobile. Pour calculer le FGP maxillaire, on considère que la mandibule est immobile et l'on transpose le mouvement à l'arcade maxillaire.

Pour déterminer le FGP, on adapte à l'arcade dont on veut obtenir le FGP une structure volumique assimilable à une boîte englobante de l'arcade complète. On choisit avantageusement pour repère orthonormé le repère obtenu lors du scannage de l'arcade antagoniste à celle dont on veut obtenir le FGP.

La structure volumique doit donc présenter une taille suffisante pour contenir les différentes positions de l'arcade qui vont constituer le FGP. Cette structure est positionnée dans le repère du scanner de l'arcade antagoniste.

Ensuite, pour chaque voxel de la structure volumique, on calcule la distance entre le centre dudit voxel et une maille du maillage de l'arcade antagoniste. Ce calcul permet de déterminer s'il existe ou non un contact, pour toutes les positions de l'arcade et pour chaque maille du maillage de l'arcade antagoniste.

La normale à chaque maille du maillage de l'arcade antagoniste permet de déterminer si le voxel se situe à l'intérieur ou à l'extérieur du maillage. On garde alors en mémoire les voxels se situant à l'intérieur, c'est-à-dire les voxels traduisant un contact entre les deux arcades. On obtient ainsi une structure volumique cumulant tous les contacts, pour toutes les positions.

L'application de l'algorithme des « marching cubes » permet de construire, à partir des voxels mémorisés, la surface du FGP. La figure 4 illustre le FGP ainsi déterminé (en transparence) et le modèle sous-jacent de l'arcade correspondante.

Comme pour les maillages des arcades, on peut afficher une carte des distances ou une carte des contacts par rapport à l'arcade antagoniste sur la surface du FGP.

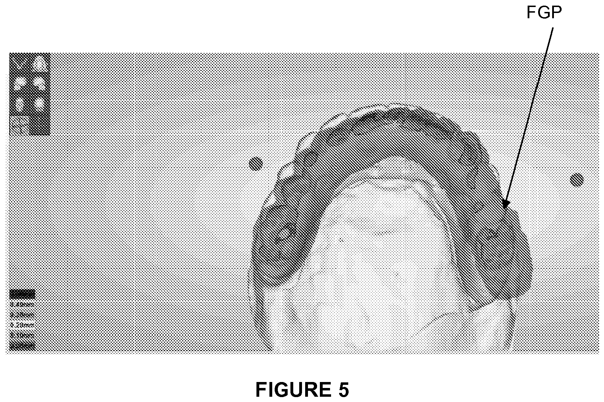

La figure 5 illustre ainsi un affichage de la carte des distances entre le FGP et le maillage de l'arcade maxillaire.

### Conception d'une prothèse dentaire

Pour concevoir une prothèse dentaire, il est possible de valider les contacts entre les modèles d'arcades portant les dents restaurées avec des prothèses provisoires (ou encore les modèles d'arcades portant les dents non préparées), puis de remplacer ces premiers modèles par des seconds modèles comprenant les dents préparées pour recevoir les prothèses définitives. Cette validation peut éventuellement comprendre des étapes successives d'ajustement.

En effet, il est possible de corréler, dans la mesure où il y a suffisamment de points d'association entre deux maillages, les premier et second modèles 3D des arcades entre eux. Une des méthodes utilisée est de cliquer et positionner des points de repères sur les deux maillages au niveau de zones reconnaissables. Une reconnaissance automatique peut venir affiner la corrélation.

Une fois le nouveau modèle associé, la cinématique mandibulaire enregistrée pour le premier modèle est associée au second pour l'animer de la même façon.

L'intérêt est de contrôler et valider les déplacements ainsi que de réaliser des restaurations prothétiques s'intégrant dans les mouvements de mastication du patient lorsque le praticien estime à l'étape des prothèses provisoires que la cinématique est correcte et fonctionnelle. Le deuxième modèle peut être un modèle intégrant les dents préparées prêtes à recevoir les prothèses définitives de tous types.

### Export des données

L'ensemble des données obtenues lors de la mise en oeuvre du procédé peuvent être mémorisées et exportées vers des logiciels de conception assistée par ordinateur. Ces données peuvent inclure la position des arcades l'une par rapport à l'autre, les plans de référence, la calotte occlusale, les points anatomiques, l'axe bicondylien ainsi que le FGP.

La conception de prothèses dentaires, orthèses ou gouttières occlusales prend en compte ces données pour guider la conception.

D'autre part, les éléments fournis par le logiciel peuvent être fabriqués au moyen d'une imprimante 3D. La position des modèles l'un par rapport à l'autre peut être maintenu grâce à un occluseur. Des modèles interchangeables du FGP peuvent être montés sur ce même occluseur, ce qui permet au prothésiste de modifier la conception manuellement pour ajuster l'occlusion. Il dispose ainsi d'une information sur la façon dont se déplace dans l'espace l'arcade antagoniste au modèle de travail, sans utiliser d'articulateur.

### REFERENCES

WO 2013/030511

## Revendications

1. Procédé de détermination d'une cartographie des contacts entre les dents de l'arcade maxillaire et de l'arcade mandibulaire d'un individu, **caractérisé en ce qu'**il comprend les étapes suivantes :
- l'obtention de la cinématique mandibulaire enregistrée sur l'individu, ladite cinématique mandibulaire étant enregistrée en repérant et en enregistrant, au moyen d'une caméra (1000), les déplacements de marqueurs (2001) fixés d'une part sur le front du patient et d'autre part sur l'arcade mandibulaire, lors de mouvements mandibulaires du patient,
- l'obtention de maillages surfaciques de l'arcade maxillaire et de l'arcade mandibulaire et le recalage desdits maillages l'un par rapport à l'autre,
- la création d'un maillage réduit d'au moins une desdites arcades, comprenant la sélection, dans le maillage de ladite arcade, des mailles dont les noeuds sont situés à une distance inférieure à 1 cm du maillage de l'arcade antagoniste,
- la création, pour chaque maille dudit maillage réduit, d'une boîte englobante comprenant une pluralité de voxels entourant ladite maille,
- à partir de la cinématique mandibulaire, le calcul d'un réseau des contacts comprenant, pour chaque voxel de la boîte englobante, une information sur l'existence d'un contact entre ledit voxel et un nœud du maillage de l'arcade antagoniste au cours d'un mouvement relatif de l'arcade mandibulaire vis-à-vis de l'arcade maxillaire,
- pour chaque nœud dudit maillage réduit, la détermination, à partir du réseau des contacts, de l'existence ou non d'un contact entre ledit nœud et un nœud du maillage de l'arcade antagoniste,
- l'application d'une couleur représentative de l'existence d'un contact à chaque maille comprenant un nœud pour lequel un contact a été détecté, et
- l'affichage de ladite couleur sur chaque maille respective du maillage de l'arcade, de sorte à former une carte des contacts entre les dents des deux arcades.
- l'application de la cinématique mandibulaire pour animer les maillages des arcades et la réactualisation de l'affichage de la couleur au cours de cette animation.

2. Procédé selon la revendication 1, **caractérisé en ce que** lors de la réactualisation de l'affichage, on conserve temporairement l'affichage antérieur et on l'atténue progressivement.

3. Procédé de détermination d'une cartographie des distances entre les dents de l'arcade maxillaire et de l'arcade mandibulaire d'un individu, **caractérisé en ce qu'**il comprend les étapes suivantes :
- l'obtention de la cinématique mandibulaire enregistrée sur l'individu, ladite cinématique mandibulaire étant enregistrée en repérant et en enregistrant, au moyen d'une caméra (1000), les déplacements de marqueurs (2001) fixés d'une part sur le front du patient et d'autre part sur l'arcade mandibulaire, lors de mouvements mandibulaires du patient,
- l'obtention de maillages surfaciques de l'arcade maxillaire et de l'arcade mandibulaire et le recalage desdits maillages l'un par rapport à l'autre,
- la création d'un maillage réduit d'au moins une desdites arcades, comprenant la sélection, dans le maillage de ladite arcade, des mailles dont les noeuds sont situés à une distance inférieure à 1 cm du maillage de l'arcade antagoniste,
- la création, pour chaque maille dudit maillage réduit, d'une boîte englobante comprenant une pluralité de voxels entourant ladite maille,
- à partir de la cinématique mandibulaire, le calcul d'un réseau des contacts comprenant, pour chaque voxel de la boîte englobante, une information sur l'existence d'un contact entre ledit voxel et un nœud du maillage de l'arcade antagoniste au cours d'un mouvement relatif de l'arcade mandibulaire vis-à-vis de l'arcade maxillaire,
- pour chaque nœud dudit maillage réduit, la détermination, à partir du réseau des contacts, de la distance entre ledit nœud et un nœud du maillage de l'arcade antagoniste,
- l'application d'une couleur représentative de ladite distance à chaque maille comprenant ledit nœud, et
- l'affichage de ladite couleur sur chaque maille respective du maillage de l'arcade, de sorte à former une carte des distances entre les dents des deux arcades,
- l'application de la cinématique mandibulaire pour animer les maillages des arcades et la réactualisation de l'affichage de la couleur au cours de cette animation.

4. Procédé selon la revendication 1 **caractérisé en ce que** le maillage réduit est partitionné sous la forme d'un arbre k-d.

5. Procédé selon l'une des revendications 1 à 4, **caractérisé en ce que** l'on crée un maillage réduit pour chacune des deux arcades.

6. Procédé selon l'une des revendications 1 à 5, dans lequel :
- à partir du maillage de l'une desdites arcades, on crée une structure volumique adaptée pour englober l'ensemble des positions de ladite arcade par rapport à l'arcade antagoniste au cours de la cinématique mandibulaire,
- on détermine, pour chaque position de l'arcade et pour chaque voxel de ladite structure, la distance entre le centre dudit voxel et chaque nœud du maillage de l'arcade antagoniste,
- on détermine si chaque voxel se situe à l'intérieur ou à l'extérieur du maillage de l'arcade antagoniste et on mémorise les voxels qui se situent à l'intérieur dudit maillage, lesdits voxels traduisant un contact entre les arcades,
- on cumule lesdits contacts pour l'ensemble des positions,
- on construit, à partir desdits voxels mémorisés, une surface représentant l'enveloppe limite des déplacements des dents,
- on affiche, sur ladite surface, une carte des contacts, respectivement une carte des distances, entre les dents des deux arcades.

7. Procédé selon l'une des revendications 1 à 6, dans lequel, pour enregistrer la cinématique mandibulaire, on équipe le patient de marqueurs fixés directement sur les dents de l'arcade mandibulaire ou sur la mandibule par l'intermédiaire d'un support.

8. Utilisation du procédé selon l'une des revendications 1 à 7 pour concevoir une prothèse dentaire à implanter sur une arcade de l'individu, **caractérisée en ce qu'**elle comprend :
- l'obtention d'un premier maillage de ladite arcade,
- à partir dudit premier maillage, la mise en oeuvre du procédé pour générer une cartographie des contacts ou une cartographie des distances entre les dents des arcades mandibulaire et maxillaire,
- l'ajustement d'un modèle de la prothèse de sorte à optimiser les contacts et/ou distances obtenus lorsque le modèle de la prothèse est intégré audit premier maillage.

9. Utilisation selon la revendication 8, **caractérisée en ce qu'**elle comprend en outre :
- l'obtention d'un second maillage de l'arcade présentant des dents préparées pour recevoir ladite prothèse,
- le remplacement du premier maillage par le second maillage,
- l'application de la cinématique mandibulaire au second maillage,
- la conception de la prothèse définitive de sorte à respecter les contacts et/ou distances obtenus avec l'ajustement réalisé sur le premier maillage.

10. Produit programme d'ordinateur comportant un ensemble d'instructions qui, une fois chargées sur un ordinateur, permettent la mise en oeuvre du procédé selon l'une des revendications 1 à 7.

## Patentansprüche

1. Verfahren zur Bestimmung einer Karte der Kontakte zwischen den Zähnen des Maxillarbogens und des Mandibularbogens eines Individuums, **dadurch gekennzeichnet, dass** es die folgenden Schritte umfasst:
- Erhalten der auf dem Patienten aufgezeichneten Mandibularkinematik, wobei die Mandibularkinematik durch Ermitteln und Aufzeichnen, mittels einer Kamera (1000), der Verlagerungen von Markern (2001) aufgezeichnet wird, die zum einen auf der Stirn des Patienten und zum anderen auf dem Mandibularbogen befestigt sind, bei Mandibularbewegungen des Patienten,
- Erhalten von Oberflächenrastern des Maxillarbogens und des Mandibularbogens und Synchronisieren der Raster im Verhältnis zueinander,
- Bilden eines reduzierten Rasters von mindestens einem der Bögen, die Auswahl, im Raster des Bogens, der Maschen umfassend, deren Knoten sich in einer Entfernung von weniger als 1 cm vom Raster des antagonistischen Bogens befinden,
- Bilden, für jede Masche des reduzierten Rasters, einer Hüllbox, die eine Vielzahl von Voxeln umfasst, die die Masche umgeben,
- auf der Basis der Mandibularkinematik, Berechnen eines Kontaktnetzwerks, das für jedes Voxel der Hüllbox eine Information über das Vorhandensein eines Kontakts zwischen dem Voxel und einem Knoten des Rasters des antagonistischen Bogens während einer relativen Bewegung des Mandibularbogens gegenüber dem Maxillarbogen umfasst,
- für jeden Knoten des reduzierten Rasters, Bestimmen, auf der Basis des Kontaktnetzwerks, des Vorhandenseins oder nicht eines Kontakts zwischen dem Knoten und einem Knoten des Rasters des antagonistischen Bogens,
- Anwenden einer Farbe, die für das Vorhandensein eines Kontakts auf jeder Masche repräsentativ ist, die einen Knoten umfasst, für den ein Kontakt ermittelt wurde, und
- Anzeigen der Farbe auf jeder jeweiligen Masche des Rasters des Bogens, so dass eine Karte der Kontakte zwischen den Zähnen der zwei Bögen gebildet wird,
- Anwenden der Mandibularkinematik, um die Raster der Bögen zu animieren und Reaktualisierung der Anzeige der Farbe während dieser Animation.

2. Verfahren nach Anspruch 1, **dadurch gekennzeichnet, dass** bei der Reaktualisierung der Anzeige die vorherige Anzeige temporär beibehalten und schrittweise abgemildert wird.

3. Verfahren zur Bestimmung einer Karte der Abstände zwischen den Zähnen des Maxillarbogens und des Mandibularbogens eines Individuums, **dadurch gekennzeichnet, dass** es die folgenden Schritte umfasst:
- Erhalten der auf dem Patienten aufgezeichneten Mandibularkinematik, wobei die Mandibularkinematik durch Ermitteln und Aufzeichnen, mittels einer Kamera (1000), der Verlagerungen von Markern (2001) aufgezeichnet wird, die zum einen auf der Stirn des Patienten und zum anderen auf dem Mandibularbogen befestigt sind, bei Mandibularbewegungen des Patienten,
- Erhalten von Oberflächenrastern des Maxillarbogens und des Mandibularbogens und Synchronisieren der Raster im Verhältnis zueinander,
- Bilden eines reduzierten Rasters von mindestens einem der Bögen, die Auswahl, im Raster des Bogens, der Maschen umfassend, deren Knoten sich in einer Entfernung von weniger als 1 cm vom Raster des antagonistischen Bogens befinden,
- Bilden, für jede Masche des reduzierten Rasters, einer Hüllbox, die eine Vielzahl von Voxeln umfasst, die die Masche umgeben,
- auf der Basis der Mandibularkinematik, Berechnen eines Kontaktnetzwerks, das für jedes Voxel der Hüllbox eine Information über das Vorhandensein eines Kontakts zwischen dem Voxel und einem Knoten des Rasters des antagonistischen Bogens während einer relativen Bewegung des Mandibularbogens gegenüber dem Maxillarbogen umfasst,
- für jeden Knoten des reduzierten Rasters, Bestimmen, auf der Basis des Kontaktnetzwerks, des Abstands zwischen dem Knoten und einem Knoten des Rasters des antagonistischen Bogens,
- Anwenden einer Farbe, die für den Abstand zu jedem Knoten repräsentativ ist, der den Knoten umfasst, und
- Anzeigen der Farbe auf jeder jeweiligen Masche des Rasters des Bogens, so dass eine Karte der Abstände zwischen den Zähnen der zwei Bögen gebildet wird,
- Anwenden der Mandibularkinematik, um die Raster der Bögen zu animieren und Reaktualisierung der Anzeige der Farbe während dieser Animation.

4. Verfahren nach Anspruch 1, **dadurch gekennzeichnet, dass** das reduzierte Raster in Form eines Baums k-d partitioniert ist.

5. Verfahren nach einem der Ansprüche 1 bis 4, **dadurch gekennzeichnet, dass** für jeden der zwei Bögen ein reduziertes Raster gebildet wird.

6. Verfahren nach einem der Ansprüche 1 bis 5, wobei:
- auf der Basis des Rasters von einem der Bögen eine Volumenstruktur gebildet wird, die geeignet ist, die Gesamtheit der Positionen des Bogens in Bezug auf den antagonistischen Bogen während der Mandibularkinematik zu umhüllen,
- für jede Position des Bogens und für jedes Voxel der Struktur der Abstand zwischen der Mitte des Voxels und jedem Knoten des Rasters des antagonistischen Bogens bestimmt wird,
- bestimmt wird, ob sich jedes Voxel innerhalb oder außerhalb des Rasters des antagonistischen Bogens befindet und die Voxel gespeichert werden, die sich innerhalb des Rasters befinden, wobei die Voxel für einen Kontakt zwischen den Bögen stehen,
- die Kontakte für die Gesamtheit der Positionen kumuliert werden,
- auf der Basis der gespeicherten Voxel eine Oberfläche konstruiert wird, die die Grenze der Verlagerungen der Zähne darstellt,
- auf der Oberfläche eine Karte der Kontakte beziehungsweise eine Karte der Abstände zwischen den Zähnen der zwei Bögen angezeigt wird.

7. Verfahren nach einem der Ansprüche 1 bis 6, wobei zur Aufzeichnung der Mandibularkinematik der Patient mit Markern ausgestattet wird, die direkt auf den Zähnen des Mandibularbogens oder auf dem Kiefer mit Hilfe eines Halters befestigt werden.

8. Verwendung des Verfahrens nach einem der Ansprüche 1 bis 7 zwecks Entwurfs einer auf einem Bogen des Individuums zu implantierenden Zahnprothese, **dadurch gekennzeichnet, dass** sie umfasst:
- Erhalten eines ersten Rasters des Bogens,
- Durchführen des Verfahrens auf der Basis des ersten Rasters, um eine Karte der Kontakte oder eine Karte der Abstände zwischen den Zähnen des Mandibularbogens und Maxillarbogens zu generieren,
- Korrigieren eines Modells der Prothese, um die erhaltenen Kontakte und/oder Abstände zu optimieren, wenn das Modell in das erste Raster integriert ist.

9. Verwendung nach Anspruch 8, **dadurch gekennzeichnet, dass** sie ferner umfasst:
- Erhalten eines zweiten Rasters des Bogens, das Zähne darstellt, die für die Aufnahme der Prothese vorbereitet sind,
- Ersetzen des ersten Rasters durch das zweite Raster,
- Anwenden der Mandibularkinetik auf das zweite Raster,
- Entwerfen der endgültigen Prothese derart, dass die mit der auf dem ersten Raster durchgeführten Korrektur erhaltenen Kontakte und/oder Abstände eingehalten werden.

10. Rechnerprogrammprodukt, aufweisend eine Gesamtheit von Befehlen, die, sobald sie auf einem Rechner geladen sind, die Durchführung des Verfahrens nach einem der Ansprüche 1 bis 7 gestatten.

## Claims

1. Method for determining a mapping of contacts between the teeth of the maxillary arch and the mandibular arch of a patient, **characterised in that** it comprises the following steps:
- obtaining the mandibular kinetics recorded on the patient, said mandibular kinetics being recorded by locating and by recording, by means of a camera (1000), the displacements of markers (2001) attached on the one hand to the forehead of the patient and on the other hand to the mandibular arch, during mandibular movements of the patient,
- obtaining surface meshes of the maxillary arch and the mandibular arch and registering said meshes relative to one another,
- creating a reduced mesh of at least one of said arches, comprising the selection, in the mesh of said arch, of the cells in which the nodes are located at a distance of less than 1 cm from the mesh of the opposite arch,
- creating, for each cell of said reduced mesh, a bounding box comprising a plurality of voxels surrounding said cell,
- using the mandibular kinetics, calculating a network of contacts comprising, for each voxel of the bounding box, information on the existence of a contact between said voxel and a node of the mesh of the opposite arch during a relative movement of the mandibular arch in relation to the maxillary arch,
- for each node of said reduced mesh, determining, using the network of contacts, the existence or not of a contact between said node and a node of the mesh of the opposite arch,
- applying a colour representative of the existence of a contact to each cell comprising a node for which a contact has been detected, and
- displaying said colour on each respective cell of the mesh of the arch, so as to form a map of the contacts between the teeth of the two arches.
- applying the mandibular kinetics to animate the meshes of the arches and updating the display of colour during this animation.

2. Method according to claim 1, **characterised in that** during the updating of the display, the previous display is temporarily conserved and it is progressively attenuated.

3. Method for determining a mapping of distances between the teeth of the maxillary arch and the mandibular arch of a patient, **characterised in that** it comprises the following steps:
- obtaining the mandibular kinetics recorded on the patient, said mandibular kinetics being recorded by locating and by recording, by means of a camera (1000), the displacements of markers (2001) attached on the one hand to the forehead of the patient and on the other hand to the mandibular arch, during mandibular movements of the patient,
- obtaining surface meshes of the maxillary arch and the mandibular arch and registering said meshes relative to one another,
- creating a reduced mesh of at least one of said arches, comprising the selection, in the mesh of said arch, of the cells in which the nodes are located at a distance of less than 1 cm from the mesh of the opposite arch,
- creating, for each cell of said reduced mesh, a bounding box comprising a plurality of voxels surrounding said cell,
- using the mandibular kinetics, calculating a network of contacts comprising, for each voxel of the bounding box, information on the existence of a contact between said voxel and a node of the mesh of the opposite arch during a relative movement of the mandibular arch in relation to the maxillary arch.
- for each node of said reduced mesh, determining, using the network of contacts, the distance between said node and a node of the mesh of the opposite arch,
- applying a colour representative of the distance to each cell comprising said node, and
- displaying said colour on each respective cell of the mesh of the arch, so as to form a map of the distances between the teeth of the two arches.
- applying the mandibular kinetics to animate the meshes of the arches and updating the display of colour during this animation.

4. Method according to claim 1 **characterised in that** the reduced mesh is partitioned in the form of a k-d tree.

5. Method according to one of claims 1 to 4, **characterised in that** a reduced mesh is created for each of the two arches.

6. Method according to one of claims 1 to 5, in which:
- using the mesh of one of said arches, a volumetric structure is created adapted to encompass all of the positions of said arch with respect to the opposite arch during the mandibular kinetics,
- for each position of the arch and for each voxel of said structure, the distance is determined between the centre of said voxel and each node of the mesh of the opposite arch,
- it is determined whether each voxel is located inside or outside the mesh of the opposite arch and the voxels that are located inside said mesh are memorised, said voxels translating a contact between the arches,
- said contacts are accumulated for all of the positions,
- using said memorised voxels, a surface is constructed representing the limit envelope of the displacements of the teeth,
- on said surface, a map of the contacts, respectively a map of the distances, between the teeth of the two arches is displayed.

7. Method according to one of claims 1 to 6, in which, to record the mandibular kinetics, the patient is equipped with markers attached directly to the teeth of the mandibular arch or to the mandible through a support.

8. Use of the method according to one of claims 1 to 7 to design a dental prosthesis to implant on an arch of the patient, **characterised in that** it comprises:
- obtaining a first mesh of said arch,
- using said first mesh, implementing the method to generate a mapping of the contacts or a mapping of the distances between the teeth of the mandibular and maxillary arches,
- adjusting a model of the prosthesis so as to optimise the contacts and/or distances obtained when the model of the prosthesis is integrated in said first mesh.

9. Use according to claim 8, **characterised in that** it further comprises:
- obtaining a second mesh of the arch presenting the teeth prepared to receive said prosthesis,
- replacing the first mesh by the second mesh,
- applying the mandibular kinetics to the second mesh,
- designing the definitive prosthesis so as to respect the contacts and/or distances obtained with the adjustment made on the first mesh.

10. Computer programme product including a set of instructions which, once loaded on a computer, enable the implementation of the method according to one of claims 1 to 7.
